Europäisches Patentamt

(19) European Patent Office

Office européen des brevets

(11) EP 0 926 477 A1

(12) ## DEMANDE DE BREVET EUROPEEN

(43) Date de publication:
30.06.1999 Bulletin 1999/26

(51) Int. Cl.⁶: $G01J\ 5/06$, $G01J\ 5/20$

(21) Numéro de dépôt: 98403223.5

(22) Date de dépôt: 18.12.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 23.12.1997 FR 9716339

(71) Demandeur: THOMSON-CSF
75008 Paris (FR)

(72) Inventeurs:
• Rosencher, Emmanuel
94117 Arcueil Cedex (FR)
• Micheron, François
94117 Arcueil Cedex (FR)

(54) **Imageur infrarouge à structure quantique fonctionnant à temperature ambiante**

(57) Imageur infrarouge comprenant un dispositif quantique (1) permettant une détection à température ambiante. Il comprend un refroidisseur (2) coupé thermiquement audit dispositif quantique et des moyens de commande (3) du refroidisseur recevant une commande (4, 5, 8, 9) en fonction de paramètres de prises de vue tels que contraste de la scène vue par le détecteur, ouverture de l'optique, etc.

Applications : Caméra infrarouge.

FIG.4

EP 0 926 477 A1

## Description

L'invention concerne un imageur infrarouge à structure quantique fonctionnant à température ambiante.

Le domaine de l'invention concerne la détection d'émissions infrarouges. Principalement, deux mécanismes de détection sont à l'heure actuelle utilisés :

- les détecteurs thermiques qui utilisent les variations d'un paramètre physique (résistivité, capacité, ...) avec l'échauffement dû à l'absorption de l'onde infrarouge ;
- les détecteurs quantiques qui utilisent la transition entre deux séries de niveaux quantiques séparés par une bande d'énergie interdite.

Ces derniers types de détecteurs sont particulièrement intéressants car leur performance ultime en terme de détectivité est très supérieure à celle des détecteurs thermiques. Ainsi, des détectivités de $3 \cdot 10^{11}$ cm/Hz$^{1/2}$W sont obtenues dans la bande II (entre 3 et 5 $\mu$m) avec des détecteurs à base de semiconducteurs comme HgCdTe ou PbSnTe soit plus de 20 fois supérieures aux résultats des détecteurs thermiques. Néanmoins, contrairement aux détecteurs thermiques, ces détecteurs quantiques souffrent du fait qu'ils doivent être refroidis pour pouvoir fonctionner. Typiquement, ils fonctionnent à des températures situées aux alentours de 80 K.

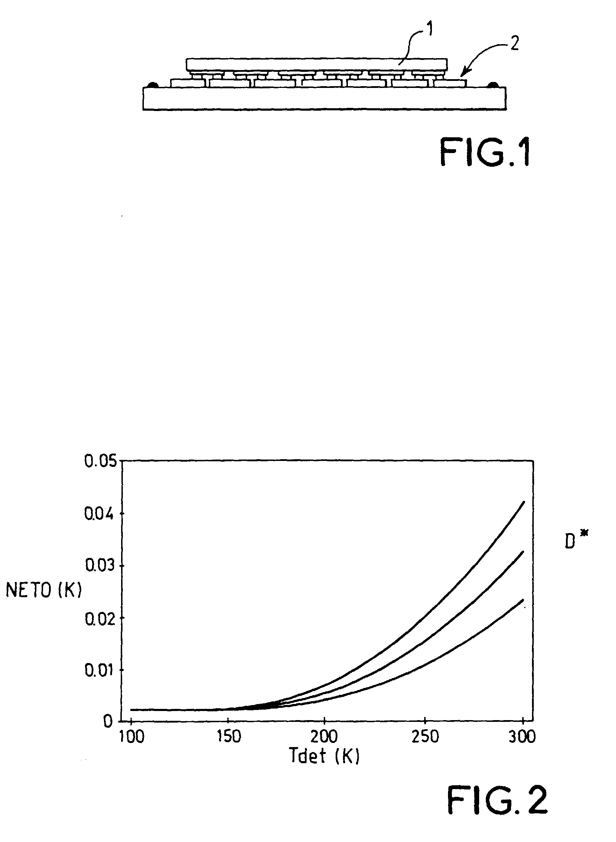

La demande de brevet français n° 96 15738 décrit un détecteur quantique fonctionnant à température ambiante ou proche de l'ambiant (250-300 K). Ce détecteur comporte des réseaux de couplage résonants qui augmentent les détectivités des détecteurs quantiques. La figure 2 représente les températures équivalentes de bruit (NETD) que l'on peut obtenir dans une structure optimisée à base d'une hétérostructure InAs$_{.95}$Sb$_{.15}$ (0.1 $\mu$m)/GaSb avec une surface de 40 x 40 $\mu$m$^2$, pour une bande passante de 20 Hz et différentes durées de vie non radiative dans le matériau.

On voit que les performances du détecteur dépendent considérablement de la température. Ainsi, pour une durée de vie de 30 ns des photoporteurs, la NETD passe de 40 mK à 5 mK lorsque la température passe de 300 à 150K.

Un tel détecteur ne nécessite pas de refroidissement pour fonctionner. Cependant, on peut avoir besoin d'améliorer les performances et notamment de réduire la NETD.

L'invention prévoit donc un imageur à structure quantique fonctionnant à température ambiante comprenant un refroidisseur couplé thermiquement à l'imageur quantique et des moyens de commande du refroidisseur recevant une commande en fonction de paramètres de prises de vue tels que contraste de la scène vue par le détecteur, ouverture de l'optique.

L'invention prévoit de contrôler les performances de l'imageur par une commande de température proche de l'ambiante. Elle est donc applicable dans un système de caméra infrarouge dont les performances sont pilotables suivant les conditions d'utilisation. La matrice de détecteurs quantiques à réseau de couplage est solidaire d'un élément de refroidissement Peltier, le tout inclus dans une caméra possédant une optique d'entrée.

Les différents objets et caractéristiques de l'invention apparaîtront plus clairement dans la description qui va suivre et dans les figures annexées qui représentent :

- la figure 1, un exemple de réalisation d'un imageur selon l'invention ;
- la figure 2, des courbes de détectivité d'un détecteur en InAsSb ;
- la figure 3, un système de commande manuelle du refroidisseur de l'imageur ;
- la figure 4, un système de commande automatique du refroidisseur de l'imageur ;
- les figures 5 et 6, une variante de réalisation du système de commande du refroidisseur ;
- la figure 7, un dispositif de filtre de type ⟨⟨ oeil de chat ⟩⟩.

La figure 1 représente un exemple de réalisation de l'imageur selon l'invention. Le dispositif de détection 1 proprement dit est une matrice de détecteurs quantiques de conception connue dans la technique. Comme cela est décrit dans la demande de brevet français n° 96 15738, la couche InAsSb a par exemple pour épaisseur 0,1 $\mu$m et les couches AlAsSb, 10 nm d'épaisseur. Associé à une face du dispositif de détection 1 (la face opposée à la face réceptrice de lumière) est coupé thermiquement un dispositif de refroidissement.

Selon l'invention, le dispositif de détection 1 fonctionne à température ambiante ou quasi ambiante et les performances du détecteur sont considérablement accrues lorsqu'il est refroidi. L'objet du refroidisseur n'est donc pas de permettre son fonctionnement comme cela est le cas par exemple pour les détecteurs ne fonctionnant pas à température ambiante (les détecteurs HgCdTe par exemple) mais d'améliorer ses performances dans certains cas d'utilisation.

En effet, à titre d'exemple, le dispositif de détection présente une courbe de température équivalente de bruit (NETD) en fonction de la température qui est du type de celles représentées en figure 2.

A température ambiante et dans des conditions acceptables de visibilité, les performances de détection seront suffisantes sans avoir à refroidir le détecteur.

Par contre, dans des conditions de réception moins bonnes, et avec de mauvaises conditions météorologiques (neige, pluie) le contraste sera moins bon et l'utilisateur pourra, avec le système de l'invention, diminuer la température d'utilisation et donc améliorer les performances de détection.

En appliquant l'invention dans une caméra, les calculs donnent que le NETD est représenté par la relation :

$$NETD = \frac{S_d^{1/2} \Delta f^{1/2}}{(IFOV)^2 S_o \tau_o \tau_a D^*(T) \int_{\lambda 1}^{\lambda 2} (\partial R/\partial T) d\lambda}$$

où

Sd : surface de détecteur
$\Delta f$ : bande passante électrique détecteur + amplificateur, inversement proportionnelle au temps d'intégration du détecteur, donc proportionnelle à la cadence image F ;
IFOV : champ de vue instantanée, inversement proportionnel au nombre d'ouverture ;
N : diamètre d'optique/focale de l'optique
So : surface de l'optique d'entrée
$\tau_o$ : transmission de l'optique
$\tau_a$ : transmission de l'atmosphère
D*(T) : détectivité dans la bande IR $\lambda_1$-$\lambda_2$, fonction de la température T
T : température du détecteur
R : radiance infrarouge

On voit clairement sur cette relation que toute variation de l'un des paramètres définissant le NETD peut être compensé par une variation de D*, donc de T, pour maintenir le NETD constant.

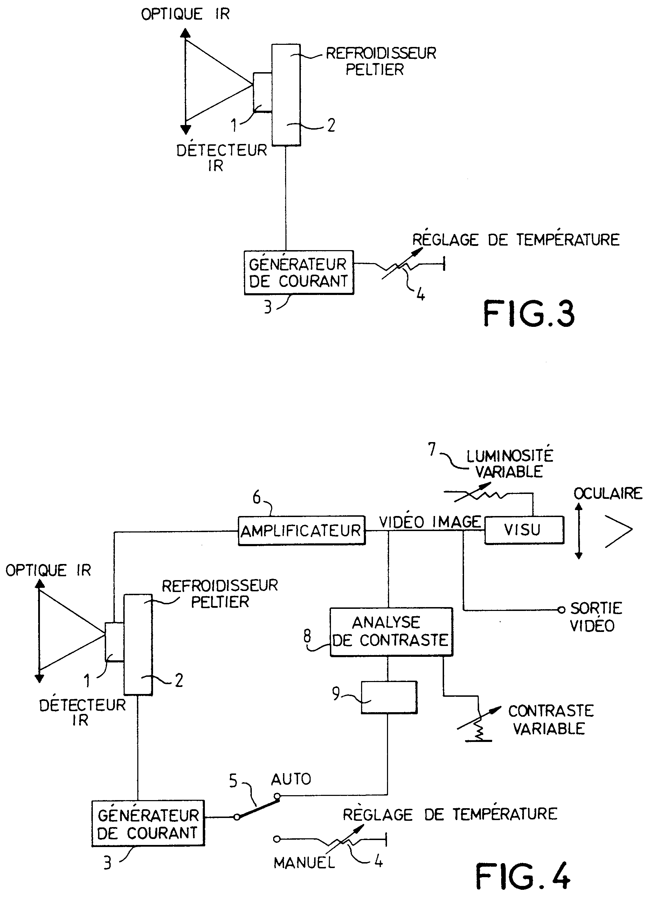

La figure 3 représente un système de commande manuel permettant de faire fonctionner le détecteur à différentes températures.

Selon un mode préféré de réalisation de l'invention le refroidisseur 2 est un refroidisseur à effet Peltier. Le système de commande du refroidisseur comporte un générateur de courant. En série avec le générateur de courant est prévu une résistance variable à commande manuelle du type, par exemple, potentiomètre. De ce fait, toute variation de la résistance implique une variation du courant délivré par le générateur de courant et donc une variation de l'efficacité de refroidissement du refroidisseur à effet Peltier.

Il est bien évident que la commande manuelle peut être munie d'un circuit électronique permettant une commande de type digitale.

Dans ce mode, l'utilisateur règle lui-même la temperature, donc les performances de la caméra, en fonction de la situation (température de la caméra, contraste de la scène, utilisation de filtres, changement d'ouverture de l'optique, passage d'un mode de détection à un mode d'identification ...).

La figure 4 représente un système de commande automatique du refroidisseur.

Ce système comporte un amplificateur 6 connecté au détecteur 1. Cet amplificateur peut être celui de la caméra et utilisé pour l'affichage de l'image détectée sur un dispositif de visualisation. Un circuit d'analyse de contraste 8 reçoit l'image détectée fournie par l'amplificateur. Selon le contraste détecté, l'analyseur de contraste 8 permet une circulation plus ou moins importante du courant fourni par le générateur. Par exemple, selon le niveau de contraste détecté, l'analyseur 8 fournit un signal de commande approprié au circuit 9 qui introduit une résistance correspondante dans le circuit du générateur de courant 3.

Dans ce mode, les variations de contraste de l'image formée par l'imageur sont donc automatiquement compensée par un circuit de commande du courant de l'élément Peltier, qui ajuste la température du détecteur. Le contraste de l'image, ainsi que la luminosité de l'écran de visualisation sont indépendamment réglables, ainsi qu'indiqué dans le schéma de la figure 4.

La figure 4 comporte également un circuit de commande manuelle. Un commutateur 5 permet de commuter la commande automatique du refroidisseur Peltier (position du commutateur 5 sur la figure 4) en commande manuelle.

Ce circuit permet ainsi de passer d'un mode veille (position manuelle) à réception moyenne mais permettant une détection, en un mode d'identification (position automatique) permettant une identification d'un objet détecté.

Le système de l'invention permet donc lorsqu'il est en position de fonctionnement automatique :

1 - Une compensation d'un faible contraste thermique (paysage « délavé » après la pluie), compensation d'une faible transmission atmosphérique $\tau_a$ (temps humide).

2 - Une compensation d'une augmentation de température de la caméra.

3 - Un changement de la fréquence image F, lié par exemple au passage d'un mode veille à faible cadence à un mode détection/identification haute cadence ($D^*.F^{-1/2}$ = cste ).

4 - Un changement du champ de vue, par variation de focale, donc à pupille d'entrée donnée entraînant une variation d'ouverture N : ($D^*N^2$ = cste ).

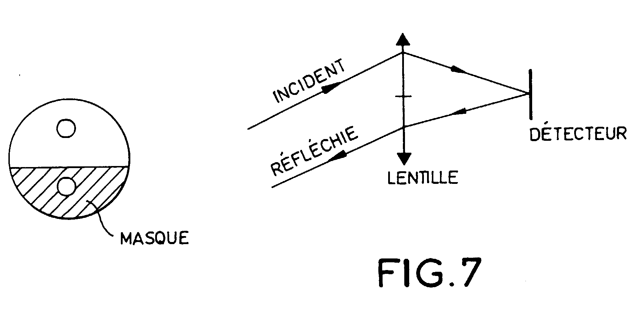

5 - Une compensation d'un masquage partiel de la pupille d'entrée ; ce cas est celui de la réduction de l'effet oeil de chat, obtenu par un masque demi pupille (voir figure 7) :

Le faisceau réfléchi par effet oeil de chat est dans la direction du faisceau incident : il émerge symétriquement par rapport au centre de la pupille : un masque demi pupille est suffisant pour l'arrêter, augmentant ainsi la discrétion de la caméra vis-à-vis des dispositifs de recherche des optiques pointées par laser : mode automatique ($D^*.So$ = cste ).

6 - Une compensation de l'abaissement de transmission de l'optique ( $\tau_o\,D^*$ à cste)

7 - Une compensation d'une réduction de bande infrarouge $\Delta\lambda = \lambda_2 - \lambda_1$, nécessitée par une analyse spectrale de la scène

$$(\text{décamouflage, analyse/identification de gaz polluants/toxiques } D^*\int_{\lambda_2}^{\lambda_1}.D\lambda = cste)$$

Les compensations proposées peuvent éventuellement être associées entre elles, dans la limite de dynamique de la fonction $D^*(T)$, et des basses températures qu'il est possible d'atteindre et dans les modes 4 à 7 nécessitant des modifications physiques apportées à l'optique (positionnement de masques, filtres, changement de focale).

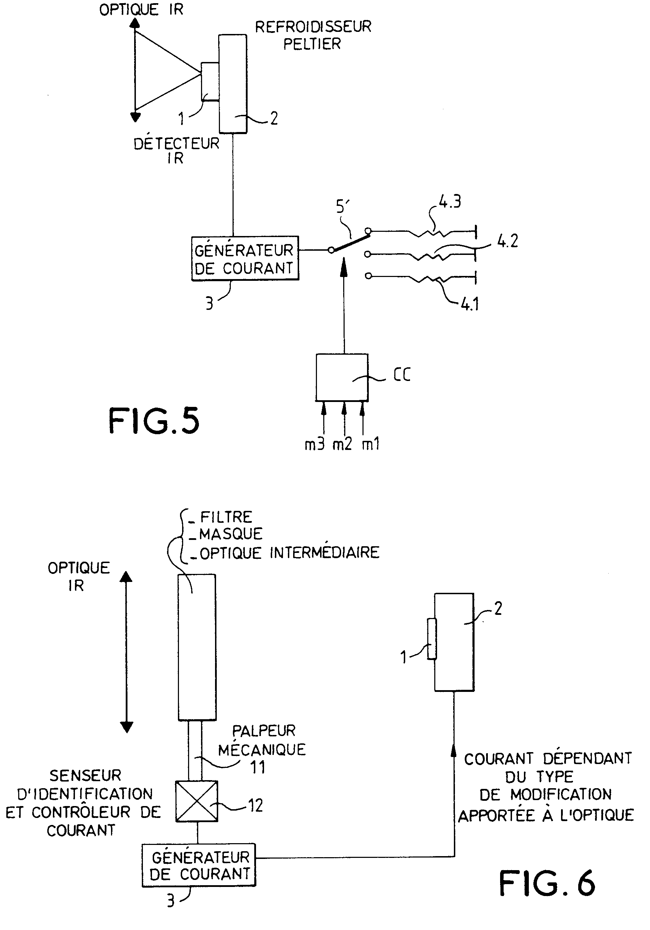

Il est possible comme cela est représenté en figure 5 de prévoir un système de commande 10 du refroidisseur qui impose des états de refroidissement particuliers et identifiés à l'avance. Chaque état correspond alors à une ou plusieurs des compensations énumérées ci-dessus. Ce système 10 peut être commuté à la place du système manuel et du système automatique, ou remplacer ces deux systèmes. Cette variante fournit un système plus économique. En effet, l'analyseur de contraste n'intervient pas dans ce système et il n'est pas utile de le prévoir pour commander le courant du refroidisseur Peltier. Ce système peut être réalisé de façon simplifiée comme cela est représenté en figure 5 à l'aide d'un commutateur 5' qui connecte le générateur sur une résistance 4.1 à 4.3 au choix. Le choix de la résistance est fait par un circuit de commande qui, en fonction des paramètres ou conditions de fonctionnement m1 à m3 de la caméra, fournit un signal de commande m1-m3 au commutateur 5'.

En figure 6, il est prévu un senseur mécanique 11 qui détecte la présence des filtres et/ou masques, ou mesure la variation de focale. Le senseur 11 est coupé mécaniquement à un contrôleur de courant 12 qui ajuste le courant de l'élément Peltier aux valeurs prédéfinies pour maintenir un contraste d'image constant, malgré les modifications apportées au système optique.

Le refroidisseur peut selon l'invention être une machine à froid de type STIRLING par exemple, à régime commandable électriquement.

L'invention s'applique à tous imageurs IR dont les performances dépendent notablement de la température (détecteurs quantiques à basse température) : dans ce dernier cas, c'est le régime de la machine à froid qui est commandé pour faire varier la température du détecteur.

**Revendications**

1.  Imageur infrarouge comprenant un dispositif quantique (1) permettant une détection à température ambiante, caractérisé en ce qu'il comprend un refroidisseur (2) coupé thermiquement audit dispositif quantique et des moyens de commande (3) du refroidisseur recevant une commande en fonction de paramètres de prises de vue tels que contraste de la scène vue par le détecteur, ouverture de l'optique, etc.

2.  Imageur selon la revendication 1, caractérisé en ce que le dispositif quantique (1) possède comme couche active un matériau à base de InAsSb.

3.  Imageur selon la revendication 2, caractérisé en ce que les couches barrières du dispositif quantique sont en AlAsSb.

4. Imageur selon la revendication 1, caractérisé en ce que le refroidisseur est un refroidisseur à effet Peltier (2).

5. Imageur selon l'une des revendications 1 ou 4, caractérisé en ce que les moyens comportent un générateur de courant (3) alimentant le fonctionnement du refroidisseur (2) et en série avec le générateur de courant, une résistance variable (4) à commande manuelle.

6. Imageur selon l'une des revendications 1 ou 4, caractérisé en ce que les moyens de commande comportent un générateur de courant (3) et un système d'analyse de contraste (8) délivrant un signal de commande fonction du contraste détecté permettant de commander le générateur de courant (3).

7. Imageur selon l'une des revendications 5 ou 6, caractérisé en ce qu'il comporte un dispositif de commutation permettant de connecter le générateur de courant soit à la résistance variable à commande manuelle, soit au système d'analyse de contraste.

8. Imageur selon l'une des revendications 1 ou 4, caractérisé en ce que les moyens de commande déterminent un nombre déterminé de modes de fonctionnement du refroidisseur, chaque mode de fonctionnement permettant de compenser un ou plusieurs paramètres de prise de vue.

FIG.1

FIG.2

FIG.3

FIG.4

OPTIQUE IR

REFROIDISSEUR PELTIER

1

2

DÉTECTEUR IR

5'

4.3

4.2

4.1

GÉNÉRATEUR DE COURANT

3

CC

**FIG.5**

m3  m2  m1

- FILTRE
- MASQUE
- OPTIQUE INTERMÉDIAIRE

OPTIQUE IR

2

1

PALPEUR MÉCANIQUE
11

SENSEUR D'IDENTIFICATION ET CONTRÔLEUR DE COURANT

12

COURANT DÉPENDANT DU TYPE DE MODIFICATION APPORTÉE À L'OPTIQUE

GÉNÉRATEUR DE COURANT

3

**FIG. 6**

MASQUE

INCIDENT

RÉFLÉCHIE

LENTILLE

DÉTECTEUR

# FIG.7

**Office européen des brevets**

**RAPPORT DE RECHERCHE EUROPEENNE**

Numéro de la demande

EP 98 40 3223

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 443 284 A (SHIMADZU CORP) 28 août 1991 <br> * colonne 1, ligne 21 - ligne 57 * <br> * revendication 1 * <br> --- | 1 | G01J5/06 <br> G01J5/20 |
| A | US 5 650 636 A (KONUMA TOSHIMITSU ET AL) 22 juillet 1997 <br> * colonne 1, ligne 9 - ligne 13 * <br> * colonne 5, ligne 22 - ligne 50 * <br> --- | 1 | |
| A | GB 2 239 555 A (PHILIPS ELECTRONIC ASSOCIATED) 3 juillet 1991 <br> * page 2, ligne 25 - page 3, ligne 12 * <br> * page 8, ligne 20 - ligne 32 * <br> ----- | 1,4 | |

**DOMAINES TECHNIQUES RECHERCHES (Int.Cl.6)**

G01J
H01L

Le présent rapport a été établi pour toutes les revendications

| Lieu de la recherche | Date d'achèvement de la recherche | Examinateur |
|---|---|---|
| LA HAYE | 27 avril 1999 | Klocke, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 98 40 3223

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-04-1999

| Document brevet cité au rapport de recherche | | Date de publication | Membre(s) de la famille de brevet(s) | | Date de publication |
|---|---|---|---|---|---|
| EP 0443284 | A | 28-08-1991 | CA | 2033401 A,C | 24-08-1991 |
| | | | CN | 1054311 A,B | 04-09-1991 |
| | | | DE | 69018241 D | 04-05-1995 |
| | | | DE | 69018241 T | 26-10-1995 |
| | | | US | 5081358 A | 14-01-1992 |
| US 5650636 | A | 22-07-1997 | JP | 7333653 A | 22-12-1995 |
| | | | JP | 8204196 A | 09-08-1996 |
| | | | JP | 8201852 A | 09-08-1996 |
| | | | CN | 1121617 A | 01-05-1996 |
| GB 2239555 | A | 03-07-1991 | AUCUN | | |

EPO FORM P0460

Pour tout renseignement concernant cette annexe : voir Journal Officiel de l'Office européen des brevets, No.12/82